# FASCICULE DE BREVET EUROPEEN

(11) **EP 2 931 635 B1**
(45) Date de publication et mention de la délivrance du brevet: **08.03.2017**
(21) Numéro de dépôt: 13808121.1
(22) Date de dépôt: 27.11.2013
(51) Int. Cl.: B65G 51/01

(54) **PROCÉDÉ ET DISPOSITIF DE GROUPAGE EN LOTS D'OBJETS FLOTTANTS AVEC SUPERPOSITION HYDRAULIQUE DES OBJETS**
VERFAHREN UND VORRICHTUNG ZUM GRUPPIEREN VON SCHWIMMENDEN GEGENSTÄNDEN IN CHARGEN MIT HYDRAULISCHER STAPELUNG DIESER OBJEKTE
METHOD AND DEVICE FOR GROUPING FLOATING OBJECTS INTO BATCHES WITH HYDRAULIC STACKING OF THE OBJECTS

(30) Priorité: 14.12.2012 FR 1262096; 07.03.2013 US 201361773883 P
(43) Date de publication de la demande: 21.10.2015
(73) Titulaire: MAF Agrobotic, 82000 Montauban (FR)
(72) Inventeur: BLANC, Philippe, F-82000 Montauban (FR)
(74) Mandataire: Cabinet BARRE LAFORGUE & associés
(86) Numéro de dépôt international: PCT/FR2013/052875
(87) Numéro de publication internationale: WO 2014/091112

(56) Documents cités:
- EP-A1- 0 729 908
- WO-A2-2012/056186
- US-A- 3 550 347
- US-B2- 6 840 715

## Description

L'invention concerne un procédé et un dispositif de groupage en lots d'objets flottants, notamment des objets fragiles tels que des fruits ou légumes flottants (pommes, tomates,...) ou autres, avec superposition des objets dans au moins un canal hydraulique d'accumulation des objets par lots.

Dans tout le texte, on désigne par "objet flottant" tout objet présentant une flottaison suffisante dans un courant de liquide pour pouvoir être transporté par ce dernier. En conséquence, cette terminologie couvre non seulement les objets flottants en surface du courant liquide, mais également en particulier les objets situés entre deux eaux.

Dans les installations de calibrage ou de tri d'objets, tels que des fruits fragiles, présentant des canaux pour le transport hydraulique des objets (permettant notamment d'éviter de les endommager), il est intéressant de pouvoir réduire la longueur totale de chaque canal d'accumulation permettant de regrouper les objets par lots, et donc la surface au sol de l'ensemble de l'installation.

Différents dispositifs pour former une superposition d'objets dans de tels canaux hydrauliques ont été proposés. EP 0729908 décrit un dispositif mécanique extrêmement complexe et coûteux qui induit des manipulations simultanées des lots d'objets et, au cours de ces manipulations, des risques d'endommagement de ces objets qui sont en général fragiles.

FR 2808706 (ou US 6840715) décrit un dispositif comprenant un canal d'accumulation, un dispositif d'alimentation hydraulique adapté pour former, dans le canal d'accumulation, un courant hydraulique apte à transporter les objets flottants le long du canal d'accumulation, un dispositif d'alimentation en objets d'une portion amont du canal d'accumulation, le canal d'accumulation étant doté, à une extrémité aval de ce dernier, d'un dispositif de retenue/libération des objets qu'il contient, le canal d'accumulation présentant, dans une zone de superposition, une hauteur supérieure à l'encombrement vertical maximum de chaque objet de façon à pouvoir recevoir des objets superposés. Dans ce dispositif, des moyens de stockage temporaire comportent d'une part un ensemble de parois verticales immergées, dont des panneaux mobiles et articulés, formant un contour fermé délimitant l'espace de stockage temporaire des fruits sur plusieurs couches superposées et, d'autre part, une manche d'immersion forcée de chaque fruit issu du convoyeur dans l'espace délimité par le contour fermé. La manche d'immersion est inclinée avec une extrémité d'entrée qui s'étend dans la zone de réception des fruits et une autre extrémité de sortie dirigée vers le fond du bassin et s'ouvrant au-dessous du niveau de l'extrémité inférieure du panneau. Ces moyens d'immersion sont complexes, peu fiables, et entraînent nécessairement des chocs entre les objets et la manche d'immersion, et entre les objets eux-mêmes, qui sont fragiles, et donc la détérioration de ces objets.

WO 2012/056186 décrit un dispositif de groupage en lots d'objets flottants fragiles selon le préambule de la revendication 6, comprenant un poussoir motorisé d'empilement disposé à l'amont de la zone de superposition de chaque canal d'accumulation. WO2012/056186 divulgue aussi un procédé de groupage en lots d'objets flottants selon le préambule de la revendication 1. Ce dispositif donne globalement satisfaction mais implique d'équiper chaque canal d'accumulation d'un dispositif d'empilement, qui reste relativement coûteux.

L'invention vise donc à pallier ces inconvénients. À cet effet, elle vise à proposer un procédé et un dispositif de groupage en lots d'objets flottants fragiles permettant de former une superposition d'objets dans une zone de superposition de chaque canal d'accumulation, et ce de façon extrêmement simple, efficace, sans risque d'endommagement des objets.

Plus particulièrement, l'invention vise à permettre la superposition des objets sans nécessiter l'adjonction d'un mécanisme spécifique motorisé et/ou comprenant de nombreuses pièces mobiles.

Dans tout le texte, les termes "amont" et "aval" sont utilisés en référence au sens de circulation des objets dans le dispositif de groupage, correspondant également au sens de circulation du courant hydraulique transportant ces objets.

L'invention concerne donc un procédé de groupage en lots d'objets flottants -notamment d'objets fragiles tels que des fruits ou légumes flottants-dans au moins un canal, dit canal d'accumulation, dans lequel :
- un courant hydraulique apte à transporter les objets est formé dans chaque canal d'accumulation,
- une portion amont d'au moins un canal d'accumulation est alimentée avec des objets de sorte que les objets flottants sont transportés par le courant hydraulique le long du canal d'accumulation jusqu'à une extrémité aval de ce dernier dotée d'un dispositif de retenue/libération des objets,
- chaque canal d'accumulation présentant, au moins dans une portion aval de ce dernier, dite zone de superposition, une hauteur supérieure à l'encombrement vertical maximum -notamment supérieur à deux fois l'encombrement vertical maximum- de chaque objet de façon à pouvoir recevoir des objets superposés,
caractérisé en ce que la vitesse du courant hydraulique formé dans au moins un canal d'accumulation -notamment dans chaque canal d'accumulation- est ajustée de façon à entraîner une superposition des objets retenus dans la zone de superposition du canal d'accumulation contre le dispositif de retenue/libération fermé de façon à retenir les objets.

L'inventeur a en effet constaté avec surprise et par hasard qu'un simple ajustement de la vitesse du courant hydraulique dans un canal d'accumulation à une valeur suffisante suffit à entraîner spontanément une superposition "hydraulique" des objets, ces derniers étant repoussés vers le fond du canal contre le dispositif de retenue/libération (qui est fermé pour retenir les objets en laissant passer le courant hydraulique) par le seul effet de cette vitesse du courant hydraulique. Cette superposition signifie que les objets ne sont plus alignés horizontalement les uns au contact des autres en une seule couche à la surface du courant hydraulique. Une telle superposition peut consister en l'immersion au moins partielle de certains des objets intercalés verticalement entre d'autres objets, voire en la formation de plusieurs couches d'objets verticalement dans la zone de superposition. Ce phénomène se produit par contact direct des objets entre eux, mais sans choc. Il est en outre possible d'ajuster la vitesse du courant hydraulique de telle sorte que l'immersion des objets vers le fond du canal d'accumulation s'effectue en douceur uniquement sous l'effet de ladite vitesse.

L'inventeur a en outre constaté avec surprise qu'il existe en réalité une plage de vitesse du courant hydraulique dans laquelle la vitesse est suffisante pour entraîner spontanément cette superposition hydraulique, mais pour autant est relativement faible et n'entraîne ni turbulences intempestives, ni détérioration des objets, ni débordement par ailleurs du canal d'accumulation. En effet, les objets accumulés (et éventuellement superposés) dans le canal d'accumulation, et le dispositif de retenue/libération qui est transparent au courant hydraulique, présentent une perte de charge s'opposant à l'écoulement du courant hydraulique, perte de charge qui peut être relativement importante et est d'autant plus importante que la hauteur de superposition des objets dans la zone de superposition est elle-même importante. En conséquence, on pourrait s'attendre à ce qu'une augmentation de vitesse du courant hydraulique ait en réalité pour effet de produire des phénomènes de turbulences et/ou un débordement du courant hydraulique sur les côtés du canal d'accumulation. Or, il n'en est rien, et on constate en pratique qu'il existe une vitesse du courant hydraulique suffisante pour entraîner spontanément une superposition des objets alors que le dispositif de retenue/libération est à l'état fermé, sans pour autant entraîner des phénomènes de turbulences risquant de détériorer les produits ni un débordement du canal d'accumulation.

Le procédé selon l'invention permet donc de réaliser de façon extrêmement simple, et sans adjonction d'aucun dispositif mécanique spécifique, des lots comprenant des objets superposés les uns sur les autres dans le courant hydraulique -notamment en plusieurs couches d'objets superposées les unes sur les autres retenues par le dispositif de retenue/libération dans la zone de superposition-. En outre, cette superposition est obtenue par voie hydraulique continûment, sans choc des objets les uns contre les autres ou contre des organes mécaniques mobiles, c'est-à-dire sans risque de détérioration des objets eux-mêmes, même lorsque ces derniers sont extrêmement fragiles.

L'ajustement de la vitesse du courant hydraulique pour entraîner une superposition des objets peut faire l'objet de différentes variantes. Il est possible par exemple de maintenir la vitesse du courant hydraulique en permanence à une valeur constante et unique susceptible d'entraîner une superposition des objets. Il est aussi possible de compter les objets (ou le poids total des objets) introduits dans chaque canal d'accumulation, et d'ajuster la vitesse du courant hydraulique à une valeur susceptible d'entraîner une superposition des objets dans un canal d'accumulation après avoir alimenté ce canal d'accumulation avec un nombre (ou un poids) minimum prédéterminé d'objets. Il est également possible de détecter (par exemple avec des cellules photoélectriques) la hauteur occupée par les objets dans le canal d'accumulation en un ou plusieurs points le long de ce dernier et d'ajuster la vitesse du courant hydraulique à une valeur susceptible d'entraîner une superposition des objets lorsque cette hauteur correspond à une couche d'objets. L'ajustement des différentes vitesses du courant hydraulique peut être fait de façon discrète, c'est-à-dire en sélectionnant une valeur de vitesse parmi une pluralité de valeurs prédéterminées ; ou au contraire de façon continue en augmentant continûment la vitesse du courant hydraulique jusqu'à ce qu'elle atteigne une valeur à partir de laquelle une superposition des objets est détectée en au moins une zone prédéterminée du canal d'accumulation.

Il est également possible d'ajuster la vitesse du courant hydraulique à une valeur susceptible d'entraîner une superposition des objets en un nombre de couches supérieur à 2. Par exemple la vitesse du courant hydraulique est ajustée à une première valeur tant que le nombre d'objets introduits dans un canal d'accumulation est inférieur ou égal à un premier nombre correspondant à une couche d'objets dans ce canal d'accumulation ; puis la vitesse du courant hydraulique est ajustée à une deuxième valeur entraînant une superposition des objets en deux couches lorsque le nombre d'objets introduits dans le canal d'accumulation dépasse le premier nombre et tant qu'il est inférieur ou égal à un deuxième nombre correspondant à la présence de deux couches d'objets superposés dans le canal d'accumulation ; puis la vitesse du courant hydraulique est ajustée une troisième valeur entraînant une superposition des objets en trois couches lorsque le nombre d'objets introduits dans le canal d'accumulation dépasse le deuxième nombre, et tant qu'il est inférieur ou égal à un troisième nombre correspondant à la présence de trois couches objets superposées dans le canal d'accumulation etc.

Avantageusement, dans une variante avantageuse d'un procédé selon l'invention :
- la présence d'objets dans une zone amont de chaque canal d'accumulation est détectée,
- en l'absence de détection d'objets dans ladite zone amont, une première valeur de vitesse est impartie au courant hydraulique à l'aval de ladite zone amont dans le canal d'alimentation,
- sur détection de la présence d'objets dans ladite zone amont, une deuxième valeur de vitesse est impartie au courant hydraulique à l'aval de ladite zone amont dans le canal d'alimentation, cette deuxième valeur étant supérieure à la dite première valeur et apte à entraîner une superposition des objets dans la zone de superposition du canal d'accumulation contre le dispositif de retenue/libération fermé de façon à retenir les objets.

Ladite première valeur de vitesse est avantageusement adaptée pour permettre l'alimentation en objets de la zone de superposition et l'accumulation d'objets dans la zone de superposition, en évitant toute détérioration des objets sous l'effet de chocs des objets sur le dispositif de retenue/libération et entre eux. Ainsi, dans un procédé selon l'invention, la vitesse du courant hydraulique est initialement ajustée à une première valeur relativement faible suffisante pour commencer à alimenter le canal hydraulique en objets en minimisant les chocs des objets les uns contre les autres lors de cette alimentation initiale qui a pour effet de former une première couche d'objets flottants à la surface du courant hydraulique dans le canal d'accumulation. Cette première valeur de vitesse du courant hydraulique n'est par contre pas nécessairement suffisante pour entraîner elle-même une superposition hydraulique des produits. Lorsque des objets sont détectés dans la zone amont, c'est-à-dire lorsqu'une première couche d'objets est réalisée, ce risque de choc n'existe plus, et il est alors possible d'augmenter la vitesse du courant hydraulique à une deuxième valeur suffisante pendant au moins une certaine durée pour entraîner alors une superposition hydraulique des objets dans la zone de superposition.

Avantageusement et selon l'invention, la vitesse du courant hydraulique formé dans chaque canal d'accumulation est ajustée par réglage du débit de liquide délivré dans une entrée amont du canal d'accumulation. Ce réglage de débit peut lui-même être effectué à l'aide d'une simple vanne papillon, par ajustement du débit délivré par une pompe à l'amont de chaque canal d'accumulation, ou autre.

Par ailleurs, avantageusement et selon l'invention, le courant hydraulique est localement accéléré par une restriction de section transversale du canal d'accumulation -notamment par un ressaut du fond et/ou par une restriction de largeur du canal d'accumulation- ménagée à l'amont -notamment à l'extrémité amont- de ladite zone de superposition. Cette restriction de section est avantageusement ménagée à l'aval -notamment immédiatement à l'aval- de ladite zone amont (dans laquelle la présence des objets est détectée) et à l'aval -notamment immédiatement à l'aval- de ladite portion amont recevant l'alimentation en objets et une alimentation hydraulique.

Une telle restriction de section transversale (ou col) dans un canal d'accumulation a pour effet d'augmenter localement la vitesse du courant hydraulique. De préférence, ladite restriction de section transversale du canal d'accumulation est obtenue par un ressaut du fond du canal d'accumulation, sans modification de sa largeur, et s'étend sur une faible longueur non nulle à l'amont de ladite zone de superposition et à l'aval de ladite zone amont dans laquelle la présence des objets est détectée. Cette accélération de la vitesse localement dans le canal d'accumulation permet d'assurer en particulier que les objets, après superposition, ne remontent pas vers l'amont au-delà de ladite restriction de section en tendant à se réaligner avec un moindre taux de superposition lorsque la vitesse du courant hydraulique est ramenée à ladite première valeur. En outre, cette restriction de section permet d'obtenir une superposition hydraulique sous l'effet de la vitesse localement accélérée pour une moindre valeur de vitesse moyenne du courant hydraulique et un moindre débit total du courant hydraulique dans le canal d'accumulation.

En outre, avantageusement et selon l'invention, la vitesse du courant hydraulique est maintenue à la dite deuxième valeur pendant une durée prédéterminée après détection de la présence d'objets à ladite zone amont. Avantageusement et selon l'invention cette durée est déterminée pour assurer que la superposition des objets dans la zone de superposition ait pour effet de repousser tous les objets vers l'aval au-delà de la restriction de section, de préférence immédiatement à l'aval de la restriction de section. Autrement dit, ladite durée pendant laquelle la vitesse du courant hydraulique est ajustée à la deuxième valeur entraînant la superposition des objets est choisie de telle sorte que le front amont des objets accumulés dans la zone de superposition est situé à l'aval -notamment immédiatement à l'aval- de la zone du canal d'accumulation présentant ladite restriction de section, c'est-à-dire à l'extrémité amont de la zone de superposition. La présence d'objets dans ladite zone amont n'est alors plus détectée. Cette durée est typiquement de l'ordre de quelques dixièmes de seconde à quelques secondes.

À la fin de ladite durée prédéterminée, la vitesse du courant hydraulique est ramenée à ladite première valeur adaptée pour l'alimentation en objets du canal d'accumulation dans des conditions optimales. Les objets continuant à être alimentés dans le canal d'accumulation s'accumulent les uns contre les autres vers l'amont à partir de ce front amont, en regard de la zone présentant ladite restriction de section (c'est-à-dire au-dessus du ressaut du fond dans le mode de réalisation préférentiel mentionné ci-dessus), jusqu'à ce que la présence d'objets soit à nouveau détectée dans ladite zone amont. Le procédé est alors réitéré en ajustant la vitesse du courant hydraulique à ladite deuxième valeur pour réaliser à nouveau une superposition d'objets qui sont repoussés vers le dispositif de retenue/libération fermé.

Avantageusement et selon l'invention, ladite première valeur de la vitesse ainsi que la restriction de section sont choisies de telle sorte que les objets peuvent être superposés en s'étendant depuis l'aval de la restriction de section jusqu'au dispositif de retenue/libération sans avoir tendance à s'étaler de nouveau en un moindre taux de superposition.

L'ensemble du procédé selon l'invention peut être mis en oeuvre de façon automatique à l'aide d'une unité de commande, la détection de présence des objets pouvant être détectée par un capteur de présence tel qu'une cellule photoélectrique reliée à l'unité de commande, cette unité de commande pilotant un actionneur de vanne à l'entrée d'alimentation hydraulique de chaque canal d'accumulation.

L'invention s'étend à un dispositif de mise en oeuvre d'un procédé selon l'invention.

L'invention concerne donc également un dispositif de groupage en lots d'objets flottants -notamment d'objets fragiles tels que des fruits ou légumes flottants- selon la revendication 6.

Par ailleurs, un dispositif selon l'invention est aussi avantageusement caractérisé en ce que :
- ledit dispositif d'alimentation hydraulique comprend, à l'amont de chaque canal d'accumulation, une vanne commandée, dite vanne de canal, agencée de façon à pouvoir être placée dans au moins une première position correspondant à une première valeur de vitesse moyenne du courant hydraulique dans ledit canal d'accumulation, et dans au moins une deuxième position correspondant à au moins une deuxième valeur, supérieure à chaque première valeur, de vitesse moyenne du courant hydraulique apte à entraîner une superposition des objets dans la zone de superposition du canal d'accumulation contre le dispositif de retenue/libération fermé de façon à retenir les objets,
- il comprend une unité de commande adaptée pour commander chaque vanne de canal entre lesdites positions.

Chaque vanne de canal et/ou ladite unité de commande peuvent être adaptées pour permettre un ajustement de la vanne de canal selon une seule première position correspondant à une seule première valeur de vitesse, ou au contraire selon plusieurs positions pouvant être qualifiées de première position, c'est-à-dire permettant un ajustement de la vitesse du courant hydraulique à une valeur pouvant être qualifiée de première valeur (adaptée pour permettre l'alimentation initiale en objets de la zone de superposition et l'accumulation d'objets dans la zone de superposition en une première couche). De même, chaque vanne de canal et/ou ladite unité de commande peuvent être adaptées pour permettre un ajustement de la vanne de canal selon une seule deuxième position correspondant à une seule deuxième valeur de vitesse, ou au contraire selon plusieurs positions pouvant être qualifiées de deuxième position, c'est-à-dire entraînant une superposition hydraulique des objets dans la zone de superposition.

Avantageusement et selon l'invention, chaque vanne de canal est adaptée pour permettre un ajustement du débit du courant hydraulique dans le canal d'accumulation en fonction de ladite position de cette vanne de canal. Chaque vanne de canal peut aussi bien être une vanne proportionnelle, par exemple une vanne papillon, ou, une vanne tout ou rien (clapet, soupape...).

Avantageusement un dispositif selon l'invention est aussi caractérisé en ce qu'il comprend en outre au moins un capteur de présence d'objets dans une zone amont de chaque canal d'accumulation, chaque capteur de présence étant relié à l'unité de commande, et en ce que l'unité de commande est adaptée pour commander chaque vanne de canal dans une deuxième position (apte à entraîner une superposition hydraulique tel que mentionné ci-dessus) sur réception d'un signal du capteur de présence représentatif de la présence d'objets dans ladite zone amont du canal d'accumulation correspondant.

Par ailleurs, avantageusement et selon l'invention, chaque canal d'accumulation comprend une restriction de section transversale ménagée à l'amont de ladite zone de superposition. Cette zone de restriction de section transversale est aussi ménagée à l'aval du dispositif d'alimentation en objets et du dispositif d'alimentation hydraulique. Une telle restriction de section transversale (ou col) permet d'accélérer localement la vitesse du courant hydraulique par rapport à la vitesse du courant hydraulique dans la zone de superposition. Elle peut être formée avantageusement par un ressaut ou surélévation du fond du canal d'accumulation par rapport au fond de la zone de superposition. Ce ressaut est agencé de telle sorte que la hauteur du courant hydraulique au niveau de ladite restriction de section transversale reste suffisante pour permettre le passage des objets flottants entraînés par le courant hydraulique. Pour le reste, de préférence, le ressaut est agencé de façon à produire localement une accélération maximum de la vitesse du courant hydraulique.

Avantageusement et selon l'invention, ledit capteur de présence est disposé immédiatement à l'amont de ladite restriction de section transversale.

L'invention s'applique à un dispositif comprenant un seul canal d'accumulation. Néanmoins, elle s'applique avantageusement à un dispositif qui est aussi caractérisé en ce que :
- il comporte une pluralité de canaux d'accumulation,
- ledit dispositif d'alimentation en objets est un dispositif d'alimentation sélective comprenant au moins une ligne, dite ligne de calibrage, de convoyage, d'analyse et de tri des objets en fonction de critères prédéterminés, ladite ligne de calibrage comprenant des moyens de déchargement sélectif des objets dans les différents canaux d'accumulation.

Par ailleurs, avantageusement et selon l'invention, le dispositif de retenue/libération de chaque canal d'accumulation est transparent au courant hydraulique circulant dans le canal d'accumulation, y compris lorsque ce dispositif de retenue/libération est en position fermée de retenue des objets dans la zone de superposition.

Dans un mode de réalisation avantageux un dispositif selon l'invention comprend en outre un canal hydraulique, dit canal de collecte, à l'aval et en communication avec chaque canal d'accumulation de façon à pouvoir recevoir le courant hydraulique et des objets évacués par le dispositif de retenue/libération à l'état ouvert, au moins un poste de réception de lots d'objets délivrés par ledit canal de collecte, et un circuit de recirculation (notamment comportant au moins une pompe de recirculation) du courant hydraulique entre chaque poste de réception de lots d'objets et ledit dispositif d'alimentation hydraulique de chaque canal d'accumulation.

Un dispositif de groupage selon l'invention est par exemple applicable à titre d'unité de calibrage de fruits ou légumes, par exemple de pommes ou de poires, le poste de réception permettant de conditionner chaque lot d'objets issus d'un canal d'accumulation dans un même emballage, par exemple une caisse à claire-voie et/ou une caisse-palette généralement désignée "palox", tel que décrit par exemple par FR 2868042 ou US 7159373. En variante, le poste de réception peut être adapté pour transférer chaque lot vers un dispositif de conditionnement individuel ou par groupes des objets du lot.

L'invention permet de rendre un dispositif de groupage particulièrement compact, et ce de façon extrêmement simple et efficace. Elle est tout particulièrement avantageuse dans le cas d'un dispositif de groupage selon l'invention caractérisé en outre en ce que les différents canaux d'accumulation sont parallèles les uns aux autres et en ce que chaque ligne de calibrage du dispositif d'alimentation sélective est au moins sensiblement orthogonal à chaque canal d'accumulation.

L'invention concerne également un procédé mis en oeuvre par un dispositif de groupage selon l'invention. L'invention s'étend également à un procédé et un dispositif de groupage d'objets caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :

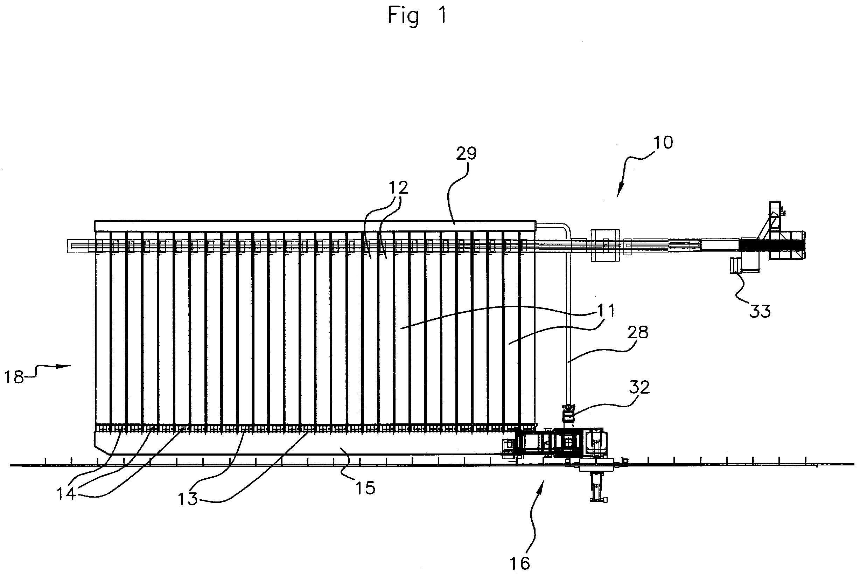

- la figure 1 est une vue schématique de dessus d'un dispositif de groupage conforme à l'invention,
- la figure 2 est une vue schématique en coupe partielle par un plan vertical selon la direction longitudinale d'un canal d'accumulation d'un dispositif de groupage conforme à l'invention, dans une étape d'accumulation d'un procédé selon l'invention dans laquelle le courant hydraulique s'écoule à une première vitesse moyenne de faible valeur,
- la figure 3 est une vue similaire à la figure 2, dans une étape de superposition d'un procédé selon l'invention dans laquelle le courant hydraulique s'écoule à une deuxième vitesse moyenne plus importante,

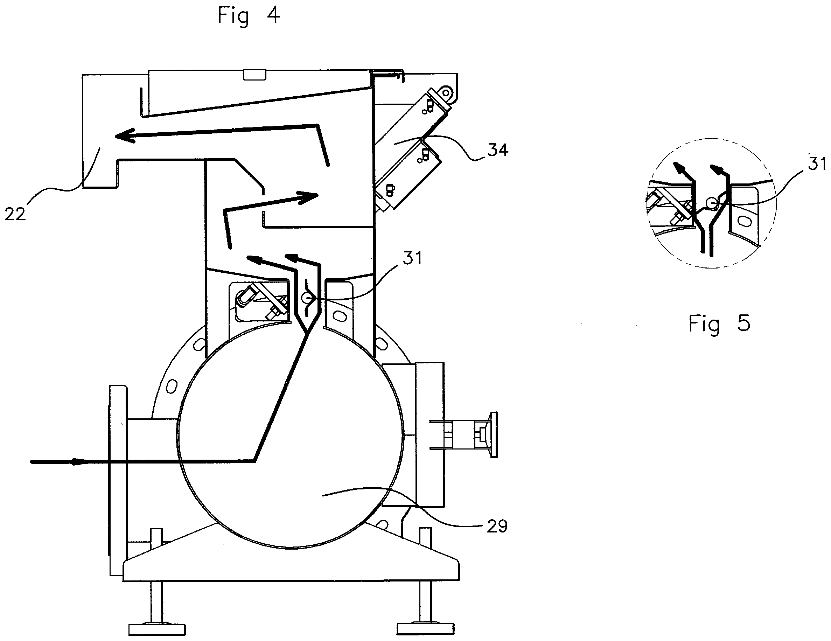

- la figure 4 est une vue schématique d'un détail de la figure 3 illustrant l'extrémité amont du canal d'accumulation et la vanne de canal en position ouverte de débit maximum,
- la figure 5 est une vue schématique d'un détail de la figure 4, illustrant la vanne de canal en position de débit minimum de la figure 2,
- la figure 6 est une vue schématique d'un logigramme d'un exemple de procédé selon l'invention.

Le dispositif selon l'invention représenté sur les figures comprend une ligne 10 de convoyage, d'analyse et de tri des objets en fonction de critères prédéterminés, cette ligne 10, dite ligne 10 de calibrage, étant dotée de moyens de déchargement sélectif (non représentés) des objets dans différents canaux d'accumulation 11 qui s'étendent globalement orthogonalement à la ligne 10 de calibrage, avec une portion d'extrémité amont 12 située sous les moyens de déchargement de la ligne 10 de calibrage. Une telle ligne 10 de calibrage est bien connue en elle-même (cf. par exemple notamment EP 0729908, US 7159373, US 5230394, US 5280838, US 5626238, US 6234297...). Elle présente en général différents postes d'analyse des objets (pesage, analyse optique,...). Un tel dispositif peut comprendre un nombre quelconque -par exemple de 5 à 50- canaux 11 d'accumulation parallèles les uns aux autres et qui se jouxtent latéralement.

De préférence, chaque canal 11 d'accumulation est adapté pour pouvoir recevoir un lot d'objets flottants destiné à remplir une unique caisse ou palox, au niveau d'un poste de réception 16 alimenté par le canal 15 de collecte. Néanmoins, cela n'est pas nécessaire et il reste possible que chaque lot d'objets contenu dans un canal d'accumulation et libéré dans le canal 15 de collecte fasse l'objet d'un autre traitement au niveau du poste de réception 16 ou de plusieurs postes de réception. Quoi qu'il en soit, chaque canal 11 d'accumulation présente une longueur suffisante pour pouvoir recevoir tous les objets d'un même lot, devant faire l'objet d'un même traitement ultérieur. En pratique, chaque canal de 11 d'accumulation reçoit des objets présentant des caractéristiques spécifiques vis-à-vis des critères de sélection, par exemple un calibre prédéterminé lorsque les objets sont des fruits. Dans un même lot, tous les objets présentent donc les mêmes caractéristiques, notamment le même calibre.

Les canaux 11 d'accumulation sont alimentés et parcourus par un courant hydraulique (en général de l'eau, éventuellement avec des additifs de traitement) généré par un dispositif d'alimentation hydraulique doté de moyens de pompage et de recirculation, tel que décrit dans ses caractéristiques générales par exemple par US 7159373. Le courant hydraulique formé dans chaque canal 11 d'accumulation est adapté pour pouvoir assurer le transport des objets flottants dans le courant hydraulique, ce dernier présentant une surface supérieure libre.

Le dispositif d'alimentation hydraulique comprend en particulier une conduite 29 d'alimentation s'étendant le long de toutes les extrémités 22 amont des canaux 11 d'accumulation recevant le flux hydraulique généré par une pompe 32 de recirculation elle-même reliée à au moins un poste 16 de réception et à une conduite 28 de recirculation du courant hydraulique en circuit fermé.

Le dispositif d'alimentation hydraulique de chaque canal 11 d'accumulation comprend une vanne commandée, dite vanne 30 de canal, à l'extrémité 22 amont de chaque canal 11 d'accumulation. Cette vanne 30 de canal est dotée d'un organe 31 mobile tel qu'un papillon permettant de régler le débit du courant hydraulique alimentant le canal 11 d'accumulation. L'organe 31 mobile est contrôlé en position et déplacé par un actionneur tel qu'un vérin 34 lui-même relié à une unité de commande de l'installation comme décrit ci-après. Dans l'exemple représenté, le papillon 31 de la vanne 30 de canal est monté rotatif autour d'un axe horizontal et est commandé dans son pivotement par le vérin 34 par l'intermédiaire d'une biellette.

Le courant hydraulique circule dans les canaux 11 d'accumulation, depuis leur portion amont 12 s'étendant sous les moyens de déchargement de la ligne 10 de calibrage, jusqu'à leur extrémité 13 aval opposée dotée d'un dispositif 14 de retenue/libération permettant, en une position fermée, de retenir les objets dans le canal d'accumulation tout en laissant passer le courant hydraulique, et, en position ouverte, de les libérer sous l'effet du courant hydraulique pour les transférer dans un canal 15 de collecte situé à l'aval de tous les canaux 11 d'accumulation. Ce dispositif 14 de retenue/libération peut être formé d'une simple grille mobile, comme décrit par exemple par WO 2012056186.

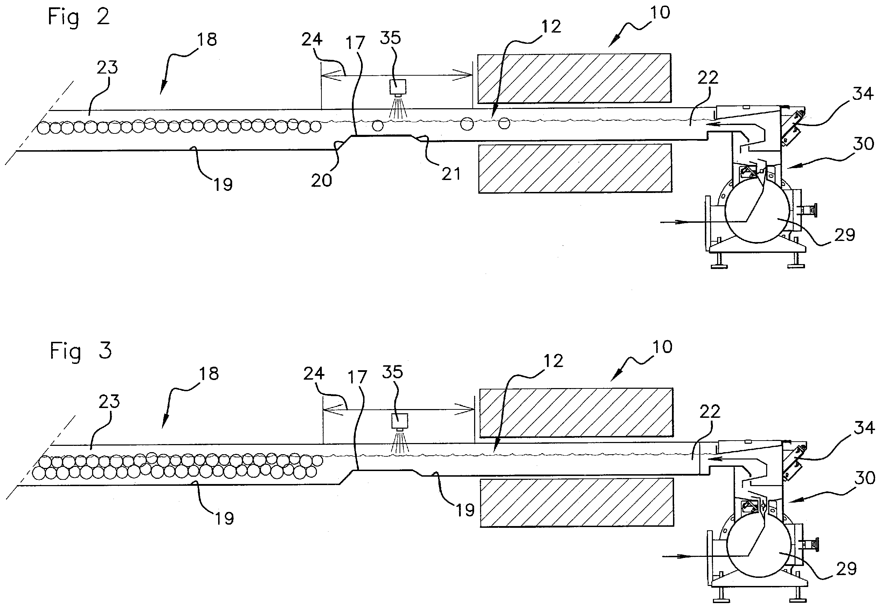

Les figures 2 et 3 représentent partiellement (partie amont) un canal 11 d'accumulation, globalement formé d'un profilé comprenant un fond 19 horizontal longitudinal, et deux parois latérales verticales 23.

L'invention permet de réaliser, dans chaque canal 11 d'accumulation une superposition des objets en plusieurs couches dans le courant hydraulique du canal 11 d'accumulation, et ce dans une portion du canal d'accumulation, dite zone 18 de superposition, qui est située à l'aval de ladite portion 12 amont du canal 11 d'accumulation. Cette zone 18 de superposition doit présenter une longueur aussi grande que possible vis-à-vis de la longueur totale du canal 11 d'accumulation entre sa portion amont 12 et son extrémité aval 13.

Dans l'exemple représenté, le fond 19 du canal 11 d'accumulation est globalement horizontal et les parois latérales verticales 23 sont de hauteur uniforme sur toute la longueur du canal 11 d'accumulation. Rien n'empêche cependant de prévoir que le canal 11 d'accumulation présente une hauteur variable, de préférence augmentant vers l'aval, pour faciliter la superposition des objets dans la zone 18 de superposition.

Quoi qu'il en soit, au moins dans la zone 18 de superposition, la hauteur totale du canal 11 d'accumulation est supérieure à l'encombrement vertical maximum de chaque objet de façon à pouvoir recevoir des objets superposés. De préférence, la hauteur totale du canal 11 d'accumulation est supérieure à deux fois l'encombrement vertical maximum de chaque objet, et est adaptée pour permettre la superposition verticale d'au moins deux objets l'un au-dessus de l'autre dans le courant hydraulique formé dans le canal 11 d'accumulation, de préférence avec un jeu entre les objets formant la couche la plus basse dans le courant hydraulique, et le fond 19, de façon à éviter le contact des objets avec le fond 19 et à permettre une libre circulation du courant hydraulique dans le canal 11 d'accumulation.

Plus exactement, la hauteur totale du canal 11 d'accumulation est, au moins dans la zone 18 de superposition, adaptée pour permettre la superposition des objets les uns au-dessus des autres, selon le nombre de couches d'objets souhaité dans cette zone 18 de superposition, et ce avec un jeu suffisant maintenu entre les objets et le fond 19. Ainsi, si l'on souhaite former au moins trois couches, la hauteur du courant hydraulique formé dans le canal 11 d'accumulation doit être suffisante pour pouvoir recevoir ces trois couches, avec un jeu tel que susmentionné. Il est à noter que dans la zone 18 de superposition, les objets flottants tels que des fruits ne se superposent pas nécessairement strictement selon des couches uniformes et homogènes, mais au contraire s'imbriquent les uns dans les autres plus ou moins partiellement, certains des objets étant repoussés vers le bas pour une immersion plus importante, d'autres étant éventuellement repoussés le haut et se trouvant moins immergés.

Chaque canal 11 d'accumulation est doté, immédiatement à l'aval de la portion amont 12 de ce dernier recevant les objets déchargés par la ligne 10 de calibrage, d'un ressaut 17 de son fond 19, ce ressaut 17 formant, par rapport à la zone 18 de superposition, une restriction de section ayant pour effet d'accélérer localement la vitesse du courant hydraulique par rapport à la vitesse moyenne du courant hydraulique dans le canal d'accumulation, et en particulier par rapport à la vitesse du courant hydraulique au niveau de ladite portion 12 amont d'alimentation en objets et par rapport à la vitesse du courant hydraulique dans la zone 18 de superposition. Le ressaut 17 du fond 19 de chaque canal 11 d'accumulation est disposé le plus en amont possible dans le canal 11 d'accumulation, immédiatement à l'aval de la portion amont 12 recevant les objets déchargés par la ligne 10 de calibrage.

Le ressaut 17 est formé d'une surélévation du fond 19 par rapport au niveau de ce fond 19 dans la zone 18 de superposition. Ainsi, par exemple, alors que la hauteur du courant hydraulique formé dans le canal 11 d'accumulation est par exemple de l'ordre de 250 mm à 300 mm dans la zone 18 de superposition, ce même courant hydraulique présente une hauteur de l'ordre de 120 mm à 180 mm à l'aplomb du ressaut 17. Le ressaut 17 est relié continûment au fond 19 de la zone 18 de superposition par un pan 20 incliné aval et au fond 19 de la portion 12 amont du canal 11 d'accumulation par un pan 21 incliné amont.

De préférence, le liquide est refoulé à partir de la conduite 29 d'alimentation, qui s'étend à un niveau inférieur à celui des canaux 11 d'accumulation, verticalement vers le haut à travers chaque vanne 30 de canal pour déboucher à l'extrémité 22 amont du canal 11 d'accumulation qui, à cette extrémité, peut présenter un fond horizontal ou incliné vers le bas et vers l'aval jusqu'à former ladite portion 12 amont d'alimentation en objets par la ligne 10 de calibrage. La hauteur du courant hydraulique dans cette portion 12 amont n'est pas nécessairement la même que celle dans la zone 18 de superposition, et notamment peut être plus faible, par exemple de l'ordre de 200 mm. Dans ce mode de réalisation, le ressaut 17 résulte également d'une surélévation par rapport au fond de la portion 12 amont du canal 11 d'accumulation.

L'ensemble du dispositif de groupage selon l'invention est piloté par une unité 33 de commande (automate), en général formée d'un système informatique, adaptée pour commander les différents actionneurs et moteurs de l'ensemble de l'installation, notamment la ligne 10 de calibrage, les moyens de déchargement, les dispositifs 14 de retenue/libération des canaux 11 d'accumulation, le poste 16 de réception, le dispositif d'alimentation hydraulique et en particulier chaque vanne 30 de canal et son vérin 34 associé... Cette unité 33 de commande reçoit aussi différents signaux issus de différents capteurs ou détecteurs du dispositif.

Une cellule 35 photoélectrique est associée à chaque canal 11 d'accumulation de façon à détecter la présence d'objets à l'amont de la zone 18 de superposition, et de préférence à l'amont du ressaut 17. Cette cellule 35 photoélectrique est reliée à l'unité 33 de commande et adaptée pour pouvoir délivrer un signal correspondant à la détection ou non d'objets flottants en regard de la cellule 35 photoélectrique.

L'unité 33 de commande pilote chacun des vérins 34 commandant le papillon 31 de chaque vanne 30 de canal en fonction du signal de détection délivré par chaque cellule 35 photoélectrique.

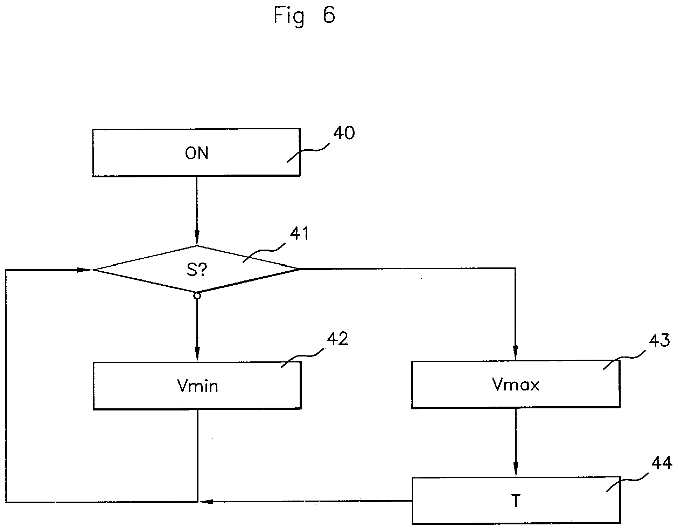

La figure 6 représente un exemple de procédé selon l'invention pouvant être mis en oeuvre par l'unité 33 de commande pour chaque canal 11 d'accumulation. Après une étape 40 de mise en route du circuit hydraulique (démarrage de la pompe 32), l'unité 33 de commande examine lors de l'étape 41 de test l'état du signal S délivré par la cellule 35 photoélectrique.

Tant que ce signal S correspond à une absence de détection d'objets (pendant une durée suffisante déterminée par une temporisation) dans le champ de la cellule 35 photoélectrique, l'unité 33 commande (étape 42) le vérin 34 de façon à maintenir le papillon 31 de la vanne 30 de canal en position de débit minimum, correspondant à une première valeur de vitesse moyenne du courant hydraulique et en particulier à une première valeur de vitesse Vmin d'accumulation, relativement faible, du courant hydraulique passant au-dessus du ressaut 17 du canal 11 d'accumulation. Cette première valeur de vitesse est ajustée pour permettre l'accumulation des objets délivrés par la ligne 10 de calibrage, contre le dispositif 14 de retenue/libération à l'état fermé à l'extrémité aval du canal 11 d'alimentation, et pour minimiser les chocs entre le dispositif 14 de retenue/libération et les objets et entre eux (figure 2). Par exemple, le débit délivré par la vanne 30 de canal dans la position de débit minimum du papillon 31 correspond à une vitesse moyenne d'accumulation du courant hydraulique de l'ordre de 5 à 10 m/min.

Lorsque le signal S délivré par la cellule 35 photoélectrique correspond à une présence d'objets pendant ladite durée suffisante dans le champ de la cellule 35 photoélectrique, l'unité 33 commande (étape 43) le vérin 34 de façon à placer et maintenir le papillon 31 de la vanne 30 canal en position de débit maximum, correspondant à une deuxième valeur de vitesse moyenne du courant hydraulique, et en particulier à une deuxième valeur de vitesse Vmax de superposition, supérieure à la dite première valeur de vitesse Vmin d'accumulation, du courant hydraulique passant au-dessus du ressaut 17 du le canal 11 d'accumulation. Cette deuxième valeur de vitesse est ajustée pour entraîner la superposition des objets flottants dans le courant hydraulique les uns au-dessus des autres, ces objets étant repoussés vers l'aval par le courant hydraulique sous l'effet de cette vitesse (figure 3) et de l'accélération produite localement par le ressaut 17. Par exemple, le débit délivré par la vanne 30 de canal dans la position de débit maximum du papillon 31 correspond à une vitesse moyenne de superposition du courant hydraulique de l'ordre de 10 à 25 m/min.

L'unité 33 de commande maintient (étape 44) cette deuxième valeur de vitesse de superposition pendant une durée T prédéterminée, puis réitère l'étape de test 41. Cette durée T est déterminée de façon à obtenir une superposition suffisante des objets pour que le front amont des objets superposés se situe à l'aval -de préférence immédiatement à l'aval- du ressaut 17.

La hauteur du ressaut 17 est adaptée pour que la vitesse du courant localement au-dessus du ressaut 17 et dans une zone, dite zone 36 d'accélération, s'étendant légèrement en amont et en aval de ce ressaut 17, soit plus importante que celle du courant dans la zone 18 de superposition, et soit suffisante pour empêcher la remontée des objets vers l'amont lorsque la vitesse du courant hydraulique revient à la première vitesse d'accumulation Vmin, après que les objets ont été superposés dans la zone 18 de superposition. En effet, les objets superposés ont tendance, sous l'effet de leur propre poids notamment, à s'étaler de nouveau en une seule couche flottant à la surface du courant hydraulique. L'accélération de la vitesse formée par le ressaut 17 s'oppose à ce phénomène et maintient le front des objets à l'extrémité amont de la zone 18 de superposition en empêchant toute remontée vers l'amont, et en conservant donc l'état de superposition des objets. La hauteur du ressaut 17 est également déterminée de façon à optimiser la superposition des objets lorsque la vitesse du courant hydraulique correspond à la vitesse de superposition Vmax. Un tel ressaut 17 a pour effet d'accélérer localement la vitesse du courant hydraulique d'une valeur importante, typiquement de l'ordre de 50 % ou plus. Cette vitesse est accélérée au-dessus du ressaut 17 et légèrement en amont et en aval de ce dernier, dans une zone 24 amont du canal 11 d'accumulation située immédiatement à l'aval de ladite portion 12 d'alimentation en objets du canal 11 d'accumulation par la ligne 10 de calibrage.

Par exemple, si la hauteur du courant hydraulique au-dessus du ressaut 17 est de l'ordre de 145 mm, alors qu'elle est de l'ordre de 230 mm dans la zone 18 de superposition, lorsque la vitesse d'accumulation du courant hydraulique est de l'ordre de 6 m/min dans la zone 18 de superposition, la vitesse locale est de 9,5 m/min au-dessus du ressaut 17, soit une augmentation de 60 %. De même, si la vitesse de superposition du courant hydraulique est de l'ordre de 14 m/min dans la zone 18 de superposition, la vitesse locale est de 22 m/min au-dessus du ressaut 17, soit à nouveau une augmentation de 60 %.

Il est à noter que la cellule 35 photoélectrique déclenchant le passage d'une vitesse d'accumulation à une vitesse de superposition et réciproquement est de préférence située à l'amont du ressaut 17 de telle sorte que le passage de la vitesse d'accumulation à la vitesse de superposition n'intervient que lorsque les objets s'accumulent au-dessus du ressaut 17, malgré l'accélération de vitesse localement formée par ce ressaut 17 pour la vitesse d'accumulation (première position de faible débit de la vanne 30 de canal).

Les étapes susmentionnées 41 à 44 peuvent être réitérées jusqu'à ce que le nombre d'objets formant un lot d'objets dans la zone 18 de superposition soit atteint. Ce nombre d'objets est compté par exemple au niveau des moyens de déchargement de la ligne 10 de calibrage, cette dernière étant adaptée pour décharger les objets individuellement. Lorsque le nombre d'objets correspondant à un lot est atteint, le dispositif 14 de retenue/libération peut être ouvert, et ce si le poste 16 de réception est prêt à recevoir et traiter le lot de ce canal 11 d'accumulation. Les objets sont alors entraînés par le courant hydraulique dans le canal 15 de collecte.

Avec un procédé et un dispositif selon l'invention, grâce à la superposition des objets dans la zone de superposition de chaque canal 11 d'accumulation, la longueur totale de chaque canal 11 d'accumulation peut être grandement réduite, au bénéfice d'une compacité beaucoup plus importante de l'ensemble de l'installation.

Il va de soi que l'invention peut faire l'objet de nombreuses variantes de réalisation par rapport au mode de résiliation représenté sur les figures et décrit ci-dessus. En particulier, il peut être prévu plusieurs cellules photoélectriques pour chaque canal 11 d'accumulation, notamment une deuxième cellule photoélectrique située à l'aval de la cellule 35 photoélectrique déclenchant le passage à la vitesse de superposition, cette deuxième cellule photoélectrique permettant de déclencher le retour à la vitesse d'accumulation dès que la superposition des objets est suffisante. Cette deuxième cellule photoélectrique peut être placée immédiatement à l'aval du ressaut 17.

Par ailleurs, il peut être prévu plusieurs positions différentes du papillon 31, correspondant à plusieurs valeurs de vitesses différentes, aussi bien en phase d'accumulation qu'en phase de superposition. Par exemple, la vitesse de superposition Vmax peut être initialement relativement faible (elle doit initialement être juste suffisante pour commencer à créer une superposition des objets) et augmentée au fur et à mesure des différentes phases successives de superposition, pour prendre une valeur maximum en fin d'accumulation d'un lot d'objets, la superposition des objets nécessitant alors une énergie plus importante. Par exemple, il est possible d'augmenter la valeur de la vitesse de superposition en fonction du nombre de couches d'objets superposés dans la zone 18 de superposition.

Il est aussi possible de prévoir des variations continues (et non discrète) de la position du papillon 31, et donc du débit du courant hydraulique et de la vitesse de ce dernier. En particulier, il est possible de prévoir que l'unité 33 commande une variation continue de la position du papillon 31 à partir de la vitesse d'accumulation jusqu'à atteindre une valeur suffisante correspondant à une vitesse de superposition, c'est-à-dire apte à entraîner une superposition hydraulique des objets, superposition détectée par une cellule photoélectrique placée à l'aval du ressaut 17.

Il est par ailleurs à noter que si le ressaut 17 permet d'améliorer l'efficacité de la superposition sous l'effet de la vitesse du courant hydraulique, il est possible de prévoir un dispositif sans ressaut. En variante ou en combinaison il est également possible de prévoir une réduction de largeur de chaque canal 11 d'accumulation pour augmenter la vitesse du courant hydraulique.

En outre, la ligne 10 de calibrage peut être remplacée par tout autre dispositif d'alimentation sélective des canaux d'accumulation. Et le canal 15 de collecte et le poste 16 de réception peuvent être remplacés par tout autre dispositif de traitement des lots d'objets évacués à l'aval des canaux 11 d'accumulation.

## Revendications

1. Procédé de groupage en lots d'objets flottants dans au moins un canal, dit canal (11) d'accumulation, dans lequel :
- un courant hydraulique apte à transporter les objets est formé dans chaque canal (11) d'accumulation,
- une portion amont d'au moins un canal d'accumulation est alimentée avec des objets de sorte que les objets flottants sont transportés par le courant hydraulique le long du canal d'accumulation jusqu'à une extrémité (13) aval de ce dernier dotée d'un dispositif (14) de retenue/libération des objets,
- chaque canal (11) d'accumulation présentant, au moins dans une portion aval de ce dernier, dite zone (18) de superposition, une hauteur supérieure à l'encombrement vertical maximum de chaque objet de façon à pouvoir recevoir des objets superposés,
**caractérisé en ce que** la vitesse du courant hydraulique formé dans au moins un canal (11) d'accumulation est ajustée de façon à entraîner une superposition des objets retenus dans la zone de superposition du canal (11) d'accumulation contre le dispositif (14) de retenue/libération fermé de façon à retenir les objets.

2. Procédé selon la revendication 1, **caractérisé en ce que** :
- la présence d'objets dans une zone (24) amont de chaque canal (11) d'accumulation est détectée,
- en l'absence de détection d'objets dans ladite zone (24) amont, une première valeur de vitesse est impartie au courant hydraulique à l'aval de ladite zone amont dans le canal (11) d'alimentation,
- sur détection de la présence d'objets dans ladite zone amont, une deuxième valeur de vitesse est impartie au courant hydraulique à l'aval de ladite zone amont dans le canal (11) d'alimentation, cette deuxième valeur étant supérieure à la dite première valeur et apte à entraîner une superposition des objets dans la zone (18) de superposition du canal (11) d'accumulation contre le dispositif (14) de retenue/libération fermé de façon à retenir les objets.

3. Procédé selon la revendication 2, **caractérisé en ce que** le courant hydraulique est localement accéléré par une restriction (17) de section transversale du canal (11) d'accumulation ménagée à l'amont de ladite zone (18) de superposition.

4. Procédé selon l'une des revendications 2 ou 3, **caractérisé en ce que** la vitesse du courant hydraulique est maintenue à ladite deuxième valeur pendant une durée prédéterminée après détection de la présence d'objets à ladite zone (24) amont.

5. Procédé selon l'une des revendications 1 à 4, **caractérisé en ce qu'**une première couche d'objets flottants est formée à la surface du courant hydraulique, puis la vitesse du courant hydraulique est ajustée à une valeur suffisante pour entraîner une superposition hydraulique des objets dans la zone de superposition.

6. Dispositif de groupage en lots d'objets flottants comprenant :
- au moins un canal, dit canal (11) d'accumulation,
- un dispositif d'alimentation hydraulique adapté pour former, dans chaque canal (11) d'accumulation, un courant hydraulique apte à transporter les objets flottants le long du canal d'accumulation,
- un dispositif (10) d'alimentation en objets d'une portion amont de chaque canal d'accumulation,
- chaque canal d'accumulation étant doté, à une extrémité (13) aval de ce dernier, d'un dispositif (14) de retenue/libération des objets qu'il contient,
- chaque canal (11) d'accumulation présentant, au moins dans une portion aval de ce dernier, dite zone (18) de superposition, une hauteur supérieure à l'encombrement vertical maximum de chaque objet de façon à pouvoir recevoir des objets superposés,
**caractérisé en ce que**
ledit dispositif d'alimentation hydraulique est adapté pour pouvoir former dans chaque canal (11) d'accumulation un courant hydraulique présentant au moins localement une vitesse apte à entraîner une superposition des objets retenus dans la zone (18) de superposition du canal (11) d'accumulation contre le dispositif (14) de retenue/libération fermé de façon à retenir les objets sans adjonction d'un mécanisme spécifique motorisé et/ou comprenant des pièces mobiles.

7. Dispositif selon la revendication 6, **caractérisé en ce que** :
- ledit dispositif d'alimentation hydraulique comprend, à l'amont de chaque canal (11) d'accumulation, une vanne commandée, dite vanne (30) de canal, agencée de façon à pouvoir être placée dans au moins une première position correspondant à une première valeur de vitesse moyenne du courant hydraulique dans ledit canal (11) d'accumulation, et dans au moins une deuxième position correspondant à au moins une deuxième valeur, supérieure à chaque première valeur, de vitesse moyenne du courant hydraulique apte à entraîner une superposition des objets dans la zone (18) de superposition du canal (11) d'accumulation contre le dispositif (14) de retenue/libération fermé de façon à retenir les objets,
- il comprend une unité (33) de commande adaptée pour commander chaque vanne de canal entre lesdites positions.

8. Dispositif selon la revendication 7, **caractérisé en ce qu'**il comprend au moins un capteur (35) de présence d'objets dans une zone (24) amont de chaque canal (11) d'accumulation, chaque capteur (25) de présence étant relié à l'unité (33) de commande, et **en ce que** l'unité (33) de commande est adaptée pour commander chaque vanne (30) de canal dans une deuxième position sur réception d'un signal du capteur de présence représentatif de la présence d'objets dans ladite zone amont du canal (11) d'accumulation correspondant.

9. Dispositif selon l'une des revendications 6 à 8, **caractérisé**
**en ce que** chaque canal (11) d'accumulation comprend une restriction (17) de section transversale ménagée à l'amont de ladite zone (18) de superposition.

10. Dispositif selon les revendications 8 et 9, **caractérisé en ce que** ledit capteur (25) de présence est disposé immédiatement à l'amont de ladite restriction (17) de section transversale.

11. Dispositif selon l'une des revendications 9 ou 10, **caractérisé en ce que** ladite restriction (17) de section transversale comprend un ressaut (17) du fond (19) du canal (11) d'accumulation.

12. Dispositif selon l'une des revendications 6 à 11, **caractérisé en ce que** :
- il comporte une pluralité de canaux (11) d'accumulation,
- ledit dispositif (10) d'alimentation en objets est un dispositif d'alimentation sélective comprenant au moins une ligne, dite ligne (10) de calibrage, de convoyage, d'analyse et de tri des objets en fonction de critères prédéterminés, ladite ligne de calibrage comprenant des moyens de déchargement sélectif des objets dans les différents canaux (11) d'accumulation.

13. Dispositif selon la revendication 12, **caractérisé en ce que** les différents canaux (11) d'accumulation sont parallèles les uns aux autres et **en ce que** chaque ligne (10) de calibrage du dispositif d'alimentation sélective est au moins sensiblement orthogonale à chaque canal (11) d'accumulation.

14. Dispositif selon l'une des revendications 6 à 13, **caractérisé en ce que** le dispositif (14) de retenue/libération est transparent au courant hydraulique circulant dans le canal (11) d'accumulation.

15. Dispositif selon l'une des revendications 6 à 14, **caractérisé en ce qu'**il comprend en outre un canal hydraulique, dit canal (15) de collecte, à l'aval et en communication avec chaque canal (11) d'accumulation de façon à pouvoir recevoir le courant hydraulique et des objets évacués par le dispositif (14) de retenue/libération, au moins un poste (16) de réception de lots d'objets délivrés par ledit canal (15) de collecte, et un circuit de recirculation du courant hydraulique entre chaque poste (16) de réception de lots d'objets et ledit dispositif d'alimentation hydraulique de chaque canal (11) d'accumulation.

## Patentansprüche

1. Verfahren zur Zusammenstellung zu einer Sammelladung von schwimmenden Gegenständen in zumindest einem Kanal, der Anhäufungskanal (11) genannt wird, wobei:
- in jedem Anhäufungskanal (11) eine hydraulische Strömung gebildet wird, die imstande ist, die Gegenstände zu transportieren,
- ein stromaufwärts befindlicher Abschnitt zumindest eines Anhäufungskanals mit Gegenständen versorgt wird, sodass die schwimmenden Gegenstände durch die hydraulische Strömung entlang des Anhäufungskanals bis zu einem stromabwärts befindlichen Ende (13) von letzterem transportiert werden, das mit einer Vorrichtung (14) zum Zurückhalten/Freigeben der Gegenstände versehen ist,
- jeder Anhäufungskanal (11) zumindest in einem stromabwärts befindlichen Abschnitt von letzterem, der Überlagerungszone (18) genannt wird, eine Höhe aufweist, die größer ist, als der maximale vertikale Platzbedarf eines jeden Gegenstands, um überlagerte Gegenstände aufnehmen zu können,
**dadurch gekennzeichnet, dass** die Geschwindigkeit der hydraulischen Strömung, die in zumindest einem Anhäufungskanal (11) gbildet wird, angepasst wird, um für eine Überlagerung der Gegenstände zu sorgen, die in der Überlagerungszone des Anhäufungskanals (11) an der geschlossenen Vorrichtung (14) zum Zurückhalten/Freigeben zurückgehalten werden, um die Gegenstände zurückzuhalten.

2. Verfahren nach Anspruch 1, **dadurch gekennzeichnet, dass**:
- die Präsenz von Gegenständen in einer stromaufwärts befindlichen Zone (24) eines jeden Anhäufungskanals (11) erfasst wird,
- bei fehlender Erfassung von Gegenständen in der besagten stromaufwärts befindlichen Zone (24) der hydraulischen Strömung stromabwärts der besagten stromaufwärts befindlichen Zone im Zuführkanal (11) ein erster Geschwindigkeitswert zugeordnet wird,
- bei Erfassung der Präsenz von Gegenständen in der besagten stromaufwärts befindlichen Zone der hydraulischen Strömung stromabwärts der besagten stromaufwärts befindlichen Zone im Zuführkanal (11) ein zweiter Geschwindigkeitswert zugeordnet wird, wobei dieser zweite Wert größer ist, als der besagte erste Wert und imstande ist, für eine Überlagerung der Gegenstände in der Überlagerungszone (18) des Anhäufungskanals (11) an der geschlossenen Vorrichtung (14) zum Zurückhalten/Freigeben zu sorgen, um die Gegenstände zurückzuhalten.

3. Verfahren nach Anspruch 2, **dadurch gekennzeichnet, dass** die hydraulische Strömung lokal durch eine Einengung (17) des Querschnitts des Anhäufungskanals (11) beschleunigt wird, die stromaufwärts der besagten Überlagerungszone (18) angeordnet ist.

4. Verfahren nach einem der Ansprüche 2 oder 3, **dadurch gekennzeichnet, dass** die Geschwindigkeit der hydraulischen Strömung während einer vorbestimmten Dauer nach Erfassung der Präsenz von Gegenständen in der besagten stromaufwärts befindlichen Zone (24) auf dem besagten zweiten Wert beibehalten wird.

5. Verfahren nach einem der Ansprüche 1 bis 4, **dadurch gekennzeichnet, dass** eine erste Schicht von schwimmenden Gegenständen an der Oberfläche der hydraulischen Strömung gebildet wird, und danach die Geschwindigkeit der hydraulischen Strömung auf einen Wert angepasst wird, der ausreichend ist, um für eine hydraulische Überlagerung der Gegenstände in der Überlagerungszone zu sorgen.

6. Vorrichtung zur Zusammenstellung zu einer Sammelladung von schwimmenden Gegenständen, Folgendes umfassend:
- zumindest einen Kanal, der Anhäufungskanal (11) genannt wird,
- eine Vorrichtung zur hydraulischen Versorgung, die ausgeführt ist, um in jedem Anhäufungskanal (11) eine hydraulische Strömung zu bilden, die imstande ist, die schwimmenden Gegenstände entlang des Anhäufungskanals zu transportieren,
- eine Vorrichtung (10) zur Zuführung von Gegenständen aus einem stromaufwärts befindlichen Abschnitt eines jeden Anhäufungskanals,
- wobei jeder Anhäufungskanal an einem stromabwärts befindlichen Ende (13) von letzterem mit einer Vorrichtung (14) zum Zurückhalten/Freigeben der Gegenstände versehen ist, die er enthält,
- wobei jeder Anhäufungskanal (11) zumindest in einem stromabwärts befindlichen Abschnitt von letzterem, der Überlagerungszone (18) genannt wird, eine Höhe aufweist, die größer ist, als der maximale vertikale Platzbedarf eines jeden Gegenstands, um überlagerte Gegenstände aufnehmen zu können,
**dadurch gekennzeichnet, dass** die besagte Vorrichtung zur hydraulischen Versorgung ausgeführt ist, um in jedem Anhäufungskanal (11) eine hydraulische Strömung bilden zu können, die zumindest lokal eine Geschwindigkeit aufweist, die imstande ist, für eine Überlagerung der Gegenstände zu sorgen, die in der Überlagerungszone (18) des Anhäufungskanals (11) an der geschlossenen Vorrichtung (14) zum Zurückhalten/Freigeben zurückgehalten werden, um die Gegenstände ohne Hinzufügen eines speziellen angetriebenen Mechanismus und/oder bewegliche Teile umfassend, zurückzuhalten.

7. Vorrichtung nach Anspruch 6, **dadurch gekennzeichnet, dass**:
- die besagte Vorrichtung zur hydraulischen Versorgung stromaufwärts eines jeden Anhäufungskanals (11) ein gesteuertes Ventil umfasst, das Kanalventil (30) genannt wird, das angeordnet ist, um in zumindest eine erste Position entsprechend einem ersten durchschnittlichen Geschwindigkeitswert der hydraulischen Strömung im besagten Anhäufungskanal (11), und in zumindest eine zweite Position platziert zu werden, die zumindest einem zweiten Wert für die durchschnittliche Geschwindigkeit der hydraulischen Strömung entspricht, der größer als jeder erste Wert ist, und imstande ist, für eine Überlagerung der Gegenstände in der Überlagerungszone (18) des Anhäufungskanals (11) an der geschlossenen Vorrichtung (14) zum Zurückhalten/Freigeben zu sorgen, um die Gegenstände zurückzuhalten,
- sie eine Steuereinheit (33) umfasst, die ausgeführt ist, um jedes Kanalventil zwischen den besagten Positionen anzusteuern.

8. Vorrichtung nach Anspruch 7, **dadurch gekennzeichnet, dass** sie zumindest einen Sensor (35) für die Präsenz von Gegenständen in einer stromaufwärts befindlichen Zone (24) eines jeden Anhäufungskanals (11) umfasst, wobei jeder Sensor (25) für die Präsenz mit der Steuereinheit (33) verbunden ist, und dadurch, dass die Steuereinheit (33) ausgeführt ist, um bei Empfang eines Signals des Sensors für die Präsenz, das repräsentativ für die Präsenz von Gegenständen in der besagten stromaufwärts befindlichen Zone des entsprechenden Anhäufungskanals (11) ist, jedes Kanalventil (30) in einer zweiten Position anzusteuern.

9. Vorrichtung nach einem der Ansprüche 6 bis 8, **dadurch gekennzeichnet, dass** jeder Anhäufungskanal (11) eine Einengung (17) des Querschnitts umfasst, die stromaufwärts der besagten Überlagerungszone (18) angeordnet ist.

10. Vorrichtung nach den Ansprüchen 8 und 9, **dadurch gekennzeichnet, dass** der besagte Sensor (25) für die Präsenz unmittelbar stromaufwärts der besagten Einengung (17) des Querschnitts angeordnet ist.

11. Vorrichtung nach einem der Ansprüche 9 oder 10, **dadurch gekennzeichnet, dass** die besagte Einengung (17) des Querschnitts einen Vorsprung (17) des Bodens (19) des Anhäufungskanals (11) umfasst.

12. Vorrichtung nach einem der Ansprüche 6 bis 11, **dadurch gekennzeichnet, dass**:
- sie eine Vielzahl von Anhäufungskanälen (11) umfasst,
- die besagte Vorrichtung (10) zur Zuführung von Gegenständen eine selektive Vorrichtung zur Zuführung ist, die zumindest eine Reihe umfasst, die Kalibrier-, Beförderungs-, Analyse- und Sortierreihe (10) der Gegenstände in Abhängigkeit von vorbestimmten Kriterien genannt wird, wobei die besagte Kalibrierreihe Mittel zum selektiven Entladen der Gegenstände in die verschiedenen Anhäufungskanäle (11) umfasst.

13. Vorrichtung nach Anspruch 12, **dadurch gekennzeichnet, dass** die verschiedenen Anhäufungskanäle (11) parallel zueinander liegen, und dadurch, dass die Kalibrierreihe (10) der selektiven Zuführvorrichtung zumindest im Wesentlichen orthogonal zu jedem Anhäufungskanal (11) steht.

14. Vorrichtung nach einem der Ansprüche 6 bis 13, **dadurch gekennzeichnet, dass** die Vorrichtung (14) zum Zurückhalten/Freigeben für die hydraulische Strömung, die im Anhäufungskanal (11) zirkuliert, transparent ist.

15. Vorrichtung nach einem der Ansprüche 6 bis 14, **dadurch gekennzeichnet, dass** sie darüber hinaus einen hydraulischen Kanal umfasst, der Sammelkanal (15) genannt wird, stromabwärts und in Verbindung mit jedem Anhäufungskanal (11), sodass er die hydraulische Strömung und Gegenstände aufnehmen kann, die von der Vorrichtung (14) zum Zurückhalten/Freigeben ausgebracht worden sind, zumindest einen Posten (16) zur Aufnahme von Gegenstandschargen, die vom besagten Sammelkanal (15) freigegeben wurden, sowie einen Umwälzkreislauf der hydraulischen Strömung zwischen jedem Posten (16) zur Aufnahme von Gegenstandschargen und der besagten Vorrichtung zur hydraulischen Versorgung eines jeden Anhäufungskanals (11).

## Claims

1. A method for grouping floating objects in batches in at least one channel, called the accumulation channel (11), in which:
- a hydraulic current capable of transporting the objects is formed in each accumulation channel (11),
- an upstream portion of at least one accumulation channel is supplied with objects so that the floating objects are transported by the hydraulic current along the accumulation channel as far as a downstream end (13) of the latter provided with a retaining/releasing device (14),
- each accumulation channel (11) having, at least in a downstream portion of the latter, called the superposition zone (18), a height greater than the maximum overall vertical size of each object so as to be able to receive superposed objects,
wherein the speed of the hydraulic current formed in at least one accumulation channel (11) is adjusted so as to bring about a superposition of the objects retained in the superposition zone of the accumulation channel (11) against the retaining/releasing device (14) which is closed so as to retain the objects.

2. A method as claimed in claim 1, wherein:
- the presence of objects in an upstream zone (24) of each accumulation channel (11) is detected,
- in the absence of detection of objects in said upstream zone (24), a first speed value is assigned to the hydraulic current downstream of said upstream zone in the accumulation channel (11),
- on detection of the presence of objects in said upstream zone, a second speed value is assigned to the hydraulic current downstream of said upstream zone in the accumulation channel (11), this second value being greater than said first value and capable of bringing about a superposition of the objects in the superposition zone (18) of the accumulation channel (11) against the retaining/releasing device (14) which is closed so as to retain the objects.

3. A method as claimed in claim 2, wherein the hydraulic current is locally accelerated by a cross-sectional restriction (17) of the accumulation channel (11) provided upstream of said superposition zone (18).

4. A method as claimed in one of claims 2 or 3, wherein the speed of the hydraulic current is maintained at said second value for a predetermined time after detection of the presence of objects in said upstream zone (24).

5. A method as claimed in any of claims 1 to 4, wherein a first layer of objects floating is formed at the surface of the hydraulic current, then the speed of the hydraulic current is adjusted to a value sufficient to bring about a hydraulic superposition of the objects in the superposition zone.

6. A device for grouping floating objects in batches comprising:
- at least one channel, called the accumulation channel (11),
- a hydraulic supply device adapted to form, in each accumulation channel (11), a hydraulic current capable of transporting the floating objects along the accumulation channel,
- an object supply device (10) for supplying objects to an upstream portion of each accumulation channel,
- each accumulation channel being provided, at a downstream end (13) of the latter, with a retaining/releasing device (14) for retaining/releasing the objects which it contains,
- each accumulation channel (11) having, at least in a downstream portion of the latter, called the superposition zone (18), a height greater than the maximum overall vertical size of each object so as to be able to receive superposed objects,
wherein said hydraulic supply device is adapted to be able to form in each accumulation channel (11) a hydraulic current having at least locally a speed capable of bringing about a superposition of the objects retained in the superposition zone (18) of the accumulation channel (11) against the retaining/releasing device (14) which is closed so as to retain the objects without adding a specific motorized mechanism and /or comprising moving parts.

7. A device as claimed in claim 6, wherein:
- said hydraulic supply device comprises, upstream of each accumulation channel (11), a controlled valve, called the channel valve (30), arranged so as to be able to be placed in at least one first position corresponding to a first average speed value of the hydraulic current in said accumulation channel (11), and in at least one second position corresponding to at least one second average speed value, greater than each first value, of the hydraulic current capable of bringing about a superposition of the objects in the superposition zone (18) of the accumulation channel (11) against the retaining/releasing device (14) which is closed so as to retain the objects,
- it comprises a control unit (33) adapted to control each channel valve between said positions.

8. A device as claimed in claim 7, wherein it comprises at least one presence sensor (35) for sensing the presence of objects in an upstream zone (24) of each accumulation channel (11), each presence sensor (25) being connected to the control unit (33), and wherein the control unit (33) is adapted to drive each channel valve (30) into a second position on reception of a signal from the presence sensor representative of the presence of objects in said upstream zone of the corresponding accumulation channel (11).

9. A device as claimed in one of claims 6 to 8, wherein each accumulation channel (11) comprises a cross-sectional restriction (17) provided upstream of said superposition zone (18).

10. A device as claimed in claims 8 and 9, wherein said presence sensor (25) is disposed immediately upstream of said cross-sectional restriction (17).

11. A device as claimed in one of claims 9 or 10, wherein said cross-sectional restriction (17) comprises a projection (17) of the bottom (19) of the accumulation channel (11).

12. A device as claimed in one of claims 6 to 11, wherein:
- it comprises a plurality of accumulation channels (11),
- said object supply device (10) is a selective supply device comprising at least one line, called the grading line (10), for conveying, analyzing and sorting the objects according to predetermined criteria, said grading line comprising means for selectively discharging the objects in the different accumulation channels (11).

13. A device as claimed in claim 12, wherein the different accumulation channels (11) are parallel to one another and wherein each grading line (10) of the selective supply device is at least substantially orthogonal to each accumulation channel (11).

14. A device as claimed in one of claims 6 to 13, wherein the retaining/releasing device (14) is pervious to the hydraulic current flowing in the accumulation channel (11).

15. A device as claimed in one of claims 6 to 14, wherein it further comprises a hydraulic channel, called the collection channel (15), downstream and in communication with each accumulation channel (11) so as to be able to receive the hydraulic current and objects discharged via the retaining/releasing device (14), at least one receiving station (16) for receiving batches of objects delivered by said collection channel (15), and a circuit for recirculation of the hydraulic current between each receiving station (16) for receiving batches of objects and said hydraulic supply device of each accumulation channel (11).
